# EUROPEAN PATENT SPECIFICATION

(11) **EP 3 348 969 B1**
(45) Date of publication and mention of the grant of the patent: **18.11.2020**
(21) Application number: 17151225.4
(22) Date of filing: 12.01.2017
(51) Int. Cl.: G01F 1/68, G01F 15/02, G01K 7/02, G01K 7/18, G01K 13/02, G01F 1/688, G01F 1/698, G01F 1/699, G01F 1/696

(54) **MEASUREMENT OF A FLUID PARAMETER AND SENSOR DEVICE THEREFORE**
MESSUNG EINES FLUIDPARAMETERS UND SENSORVORRICHTUNG DAFÜR
MESURE D'UN PARAMÈTRE DE FLUIDE ET DISPOSITIF CAPTEUR ASSOCIÉ

(43) Date of publication of application: 18.07.2018
(73) Proprietor: Sensirion AG, 8712 Stäfa (CH)
(72) Inventor: HORNUNG, Mark, 8712 Stäfa (CH)
(74) Representative: Strässle, Simon

(56) References cited:
- EP-A1- 0 698 786
- EP-A1- 2 887 057
- DE-A1-102011 081 922
- US-A1- 2004 099 057
- US-A1- 2008 289 411

## Description

### TECHNICAL FIELD

The present invention relates to a method for determining at least one parameter of a fluid by means of a sensor device, the sensor device being in particular a thermal flow sensor device and the fluid being in particular a gas, and it further relates to such a sensor device.

### PRIOR ART

Sensor devices for determination of fluid parameters are employed in a plethora of different applications. In some applications, *e.g.* in medical respiratory devices, it is essential to measure the inspiratory and expiratory volume flow (*i.e.* volume flow which goes in and out of the patient). The measurement parameter, *e.g.* the volume flow, may depend on the actual fluid temperature and the ambient pressure. Actual thermal flow sensors measure, for example, a mass flow (*i.e.* a standard volume flow), wherein a fluid temperature is compensated for by a measurement of an absolute temperature sensor disposed on, in, or in connection to a substrate of the device, *e.g.* bulk silicon. Generally, the absolute gas temperature is not measured. For respiratory devices, the inhaled and exhaled gas temperature is, however, quite different, sometimes by many degrees centigrade and the absolute bulk temperature of the substrate may be established too slowly for the comparatively fast changing gas temperature. Fast changing may be a change in a millisecond or second time frame.

In other applications, surface mounted flow/differential pressure sensors may be employed that are disposed on, for example, a printed circuit board (PCB), which PCB may have other heat generating electronic components integrated thereon. In such applications, the substrate temperature sensor generally measures the PCB temperature and not the absolute gas temperature which may limit the accuracy of the final measurement result.

In still other applications, thermal flow sensors are used for measuring thermal conductivity. In these applications, the absolute temperature of the gas is beneficial for a precise thermal conductivity measurement.

For many applications, the substrate temperature typically relaxes slowly, *e.g.* on a timescale in the range of from 1 minute to 10 minutes, the time constant of the relaxation being, for example, 5 minutes. Accordingly, devices relying on an absolute substrate temperature that only becomes a good measure for the fluid temperature when in thermal equilibrium with the fluid (*i.e.* minutes after the change of the fluid temperature) may, in some cases, be prone to inaccurate measurements.

From US 2004/099057 A1 a device for measuring the flow and the thermal conductivity is known. Said device has a sensor having a first temperature detector for measuring a first temperature and a second temperature detector for measuring a second temperature. The flow and the thermal conductivity are determined by comparing the measured temperatures.

DE20111081922 relates to a thermal flow sensor having a substrate temperature sensor, two span temperature sensors, which measure relative temperature, with a heater there-between. It also discloses the use of this sensor to provide relative and absolute temperature measurements and a fluid related parameter measurement. Said sensor however does not offer multiple operations modes, including temperature measurement, temperature-corrected or compensated parameter measurement and standard parameter measurement.

### SUMMARY OF THE INVENTION

It is an object of the present invention to specify a more accurate method for determining a parameter of a fluid by means of a sensor device.

This object is achieved by a method according to claim 1. According thereto, a method for measuring a parameter of a fluid by means of a sensor device is suggested, said parameter being a thermal conductivity of said fluid, a thermal diffusivity of said fluid, a volumetric specific heat of said fluid, wherein said sensor device comprises:
a substrate having a recess;
a span element spanning said recess at least partly; and
at least two span element temperature sensors arranged to provide a span element temperature signal.

Said sensor device is operated to measure said parameter of said fluid.

The method according to invention achieves the above-stated object in that it comprises the steps of operating said sensor device such as to:
i) measure, by means of said at least two span element temperature sensors, said span element temperature signal;
ii) deriving, from said span element temperature signal, an absolute span element temperature; and
iii) using, by said sensor device, said absolute span element temperature as a measure for an absolute temperature of said fluid for determining said parameter of said fluid.

In some embodiments, said parameter of said fluid may be the thermal conductivity (as defined, for example, in US 2010 089118 A1 or EP 2 887 057) of said fluid. Said parameter may, however, also be the thermal diffusivity (as defined, *e.g.,* in EP 1 265 068 A1), or the volumetric specific heat (as defined, for example, in US 4,944,035) of said fluid. The thermal diffusivity of the fluid may be measured as described, for example, in US 6,169,965. The volumetric specific heat of the fluid may be measured as described, for example, in US 4,944,035.

In the context of the present invention, the term *"span element"* may refer to a membrane that at least partly spans said recess. Such a membrane design is known, for example, from US 2003/0115952. The term *"span element"* may also refer to a bridge structure as taught, for example, in US 4,944,035. The bridge structure may be laterally delimited by slots, *e.g.* two parallel slots may delimit lateral edges of said bridge. The span element may be a single or a multi-piece element.

Generally, the span element is thermally decoupled from the substrate to such a degree that said span element reaches its thermal equilibrium with the fluid crossing the span element on a characteristic span element-fluid timescale in the range of from 1 millisecond to several seconds, *e.g.* up to 10 seconds to 30 seconds, while the thermal coupling of the span element to the substrate is such that the typical substrate-span element time constant characteristic for the span element to reach thermal equilibrium with the substrate would be at least 5 times longer than the span element-fluid time constant.

The typical time constant related to relaxation process for the span element to reach the thermal equilibrium with the fluid may be, for example, at least 10 times, preferably more than 50, more than a 100, or more than 1000 times smaller than the time constant related to relaxation process for the substrate itself to reach the thermal equilibrium with the fluid after a change of the fluid temperature.

In the context of the present invention, the term *"determining said parameter of said fluid"* means that either said parameter is calculated with the absolute temperature of the fluid as an input to the calculation or the otherwise conventionally deduced parameter is corrected by using the absolute fluid temperature or effects related to the absolute temperature of the fluid are compensated for by using the absolute fluid temperature.

Said at least two span element temperature sensors are arranged to provide a span element temperature signal indicative of a relative span element temperature of said span element relative to said absolute substrate temperature of said substrate, at least one of or all of the span element temperature sensors being preferably a thermopile;
wherein said sensor device further comprises:
at least one substrate temperature sensor arranged and configured to provide a substrate temperature signal indicative of an absolute substrate temperature of said substrate; and
wherein said method further comprises the step of operating said sensor device such as to additionally measure, by means of said at least one substrate temperature sensor, said substrate temperature signal; and
when deriving said absolute span element temperature from said span element temperature signal in said step ii), deriving said absolute span element temperature from both, said span element temperature signal and said substrate temperature signal.

In the context of the present invention, the term *"substrate"* is to be understood broadly as structure relative to which the at least one span element temperature sensor measures the span element temperature. Typically, the substrate is a silicon chip featured with the recess spanned by the span element.

According to some embodiments of the method of invention the absolute span element temperature is derived from said span element temperature signal and said substrate temperature signal in that the signals are processed such that the relative span element temperature relative to the absolute substrate temperature is added to the absolute substrate temperature in order to obtain the absolute span element temperature which is then, according to invention, taken as a measure for the absolute fluid temperature.

The substrate temperature sensor may be arranged on or in or in connection to the substrate.

Said sensor device comprises at least two span element temperature sensors disposed on said span element, wherein said heater element is disposed between said at least two temperature sensors; and
wherein, preferably, at least one of or all of said at least two span element temperature sensors is/are a thermopile(s).

Said sensor device comprises at least one heater element. The sensor device may be, for example, a thermal flow sensor device.

The heater element typically has a low heat capacity as well such that it also adjusts quickly (millisecond to second range) to the fluid temperature that is flowing across the heater element and to the span element temperature. In this case, the heater power delivered to the heater element should not heat the heater element to a temperature above the absolute fluid temperature as this would lead to a difference between the heater temperature and the fluid temperature; accordingly, the heater power to the heater element may preferably be off or sufficiently low.

Accordingly, the absolute span element temperature may be determined by means of temperature sensors measuring a span element temperature relative to the substrate, such as a thermopile disposed on the span element. The span element temperature sensors may be used in order to create a more accurate measurement result or in order to compare the results.

The invention is therefore generally based on the realization that the span element temperature quickly adjusts to the fluid temperature of the fluid crossing the span element if the heater power to the heater element is off or sufficiently low. The span element with its low heat capacity quickly adjusts to the fluid temperature such that it may be used as a measure of the fluid temperature.

In some embodiments, depending on the actual design of the sensor device, such an adjustment may be reached in a matter of 1 millisecond to 10 milliseconds in other designs it may be a matter of seconds. The span element temperature, as outlined herein, therefore constitutes a good and fast response measure for the fluid temperature.

The absolute fluid temperature may be an important parameter in particular in situations, where the absolute substrate temperature differs from the absolute fluid temperature as outlined above. This temperature difference may occur as a consequence of the substrate being more massive and therefore slower in response to temperature change due to a temperature change of the fluid than the span element is. Also, the substrate may be extra heated by further components that give off heat to the substrate, *e.g.* by electronic components thermally connected to the substrate. Using the absolute span element temperature as a good and fast response measure for the fluid temperature enables operating the sensor device with more precision.

Said sensor device comprises at least one first and at least one second span element temperature sensor disposed on said span element, wherein said heater element is disposed between said at least one first temperature sensor and said at least one second temperature sensor, *i.e.* the heater element may also be arranged on the span element.

In some embodiments, one of or all of said at least one first temperature sensor and said at least one second temperature sensor are thermopiles. Thermopiles are readily available and reliable temperature sensors that measure a relative temperature.

In some embodiments, said heater element is intermittently turned on and off and said span element temperature signal is measured while said heater element is turned off. In some embodiments said heater element is intermittently turned high and low and said span element temperature signal is measured while said heater element is turned low, *i.e.* the heater element power is reduced but not completely turned off. When the heater power to the heater element is off or low, the span element temperature adjusts quickly to the temperature of the fluid crossing the span element such that the span element temperature is a good measure for the fluid temperature.

The change of the heater power to the heater element may be done gradually or abruptly. In some embodiments, said heater element is turned on and off or high and low in a pulsed manner or in a harmonic manner, in particular in a sinusoidal manner.

Approaches using pulsed or sinusoidal heating are known, for example, from WO 99/34198 A2 and US 4,944,035 A and described in the dissertation by Diego Fernando Reyes Romero dated July 2014 and entitled "Development of a Medium Independent Flow Measurement Technique Based on Oscillatory Thermal Excitation." (see https://freidok.uni-freiburg.de/data/9579). Such variation schemes may be applied.

In some embodiments, said volumetric specific heat of the fluid is measured, wherein the fluid is a known gas, and wherein an ambient pressure is derived based on correlating the measured volumetric specific heat to a known data set or correlation function of said fluid, or more broadly to a correlation correlating the fluid's volumetric specific heat to the ambient pressure. The data set or correlation function may be stored into a preferably non-volatile memory of the sensor device, for example, by means of a lookup table. The correlation may also be available through a correlation function. The sensor device may also have access to such a data set or correlation function through a communication link to a data base or the like.

In some embodiments, the device is used for a specific fluid, *e.g.* a known gas such as air.

It may, however, also be that the kind of fluid is entered into the device, *e.g.* by a user or by computer means, or that the sensor device determines itself of by means of extra components and/or methods the composition of the fluid before or after the volumetric specific heat measurement such as to find the correct fluid-specific data set or correlation function as described above. The fluid determination may be done as described, for example, in US 8,408,050.

In some embodiments of the method, said absolute temperature of said fluid is evaluated by means of the sensor device on a timescale in a range of from 1 millisecond to 10 milliseconds, more preferably on a timescale in a range of from 2 milliseconds to 5 milliseconds, and in particular on the timescale of 4 milliseconds. The time frame is basically given by the time required for the span element to adjust to the fluid temperature.

The present invention also relates, in another aspect, to a sensor device for determining a parameter of a fluid, said parameter being a thermal conductivity of said fluid, a thermal diffusivity of said fluid, a volumetric specific heat of said fluid, said sensor device comprising:
a substrate having a recess;
a span element spanning said recess at least partly; and
at least two span element temperature sensors arranged to provide a span element temperature signal;
wherein said sensor device can be operated to measure said parameter of said fluid;
wherein said sensor device is configured:
i) to measure, by means of said at least two span element temperature sensors, said span element temperature signal;
ii) to derive, from said span element temperature signal, the absolute span element temperature;
iii) to use, by said sensor device, said absolute span element temperature as a measure for said actual absolute temperature of said fluid for determining said parameter of said fluid.

Said at least two span element temperature sensors are arranged to provide a span element temperature signal indicative of a relative span element temperature of said span element relative to said absolute substrate temperature of said substrate;
wherein said sensor device further comprises at least one substrate temperature sensor arranged and configured to provide a substrate temperature signal indicative of an absolute substrate temperature of said substrate; and
wherein said sensor device is further configured such as to, when deriving said absolute span element temperature from said span element temperature signal in under ii), deriving said absolute span element temperature from both, said span element temperature signal and said substrate temperature signal.

Accordingly, the span element temperature sensor is used for measurement of the fluid parameter and for measurement, in combination with the absolute substrate sensor, the absolute span element temperature.

The sensor device comprises at least one heater element. In this case, the sensor device is preferably a thermal flow sensor device. Said sensor device comprises at least two span element temperature sensors disposed on said span element, wherein said heater element is disposed between said at least two temperature sensors, and wherein, preferably, at least one of or all of said at least two span element temperature sensors is/are a thermopile(s).

In some embodiments, said sensor device is a thermal flow sensor device.

The sensor device is configured to offer a first operation mode in which the sensor device is configured as a fast response and precise temperature measurement device for measuring an absolute fluid temperature and at least one further operation mode in which the senor device is configured to measure one or more parameters of the group consisting of thermal conductivity, volumetric specific heat, and thermal diffusivity of the fluid.

In the first operation mode, the absolute fluid temperature is measured according to invention while the heater power to the heater element is preferably off or low. The term *"low"* is to be understood as sufficiently low such that the heater temperature is not disturbing the temperature measurement. The absolute fluid temperature is then outputted to a user and/or to further electronic equipment.

In the second operation mode a parameter of the fluid according to invention (not the absolute fluid temperature alone) is measured, while the measured absolute fluid temperature may be used for correction or compensation purposes relating to the measured fluid parameter.

The sensor device also offers operation modes in which it measures in a conventional manner, *i.e.* without taking into account the absolute span element temperature as fluid temperature.

Accordingly, the sensor device offers different operation modes, wherein, in a first operation mode, the sensor device is set to a predefined configuration to be operated as a fast response and precise fluid temperature sensor by determining the absolute span element temperature as the absolute fluid temperature while the measurements are done with heater power to heater element being turned off or low. In at least one second operation mode, the sensor device is set to a predefined configuration to be operated to measure a parameter of the fluid according to invention, while the measured absolute fluid temperature, measured while the heater power to the heater element is off or low, may be used for correction or compensation purposes relating to the measured fluid parameter. In the second operation mode, the heater power may be turned off or low for the absolute fluid temperature determination before or after the necessary measurements for determining the uncorrected or uncompensated fluid parameter, whereupon the compensation or correction is carried out. The heater power to the heater element may also be pulsed or varied in other ways, *e.g.* necessary for the required measurements for determination of the fluid parameter of interest, while the absolute fluid temperature measurement is done while the heater power is low or off, *i.e.* between pulses or heating periods. In at least one third operation mode, conventional measurements may be performed, *e.g.* thermal conductivity measurement may be performed as described above. According to examples not part of the present invention, it is also conceivable to have a sensor device where only two operation modes can be activated that are selected form the first, second, and third operation modes are available (*i*.*e*. first and second, first and third, or second and third operation modes).

In some embodiments, said sensor device is configured to intermittently turn on and off said heater element and wherein said sensor device is configured such as to measure said span element temperature signal while said heater element is turned off. In some embodiments, said sensor device is configured to intermittently turn high and low said heater element and wherein said sensor device is configured such as to measure said span element temperature signal while said heater element is turned low.

In some embodiments, said sensor device is configured to turn on and off said heater element in a pulsed manner or in a harmonic manner, in particular in a sinusoidal manner.

In some embodiments, said sensor device is further configured to measure an ambient pressure in that a volumetric specific heat of said fluid is measured, wherein said sensor device further comprises or has access to a data set, or more generally a correlation, correlating volumetric specific heat to ambient pressure for said fluid, wherein said sensor device is further configured to derive an ambient pressure based on the measured volumetric specific heat and said available correlation.

In some embodiments, said sensor device comprises or has access to data correlating volumetric specific heat to ambient pressure for more than one fluid, and said sensor device is configured to receive an input regarding which fluid is being measured or it is configured to determine said fluid itself or by additional components in a known manner.

In some embodiments, said sensor device said absolute temperature of said fluid is evaluated on a timescale in a range of from 1 millisecond to 10 milliseconds, more preferably on a timescale in the range of from 2 milliseconds to 5 milliseconds, and in particular on the timescale of 4 milliseconds.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows an embodiment of the sensor device according to invention; and
- Fig. 2: shows a flow diagram of an embodiment of the method according to invention of measurement of a parameter of the fluid g by use of the absolute span element temperature as fluid temperature measure derived from a relative span element temperature measurement and an absolute substrate temperature measurement.

### DESCRIPTION OF PREFERRED EMBODIMENTS

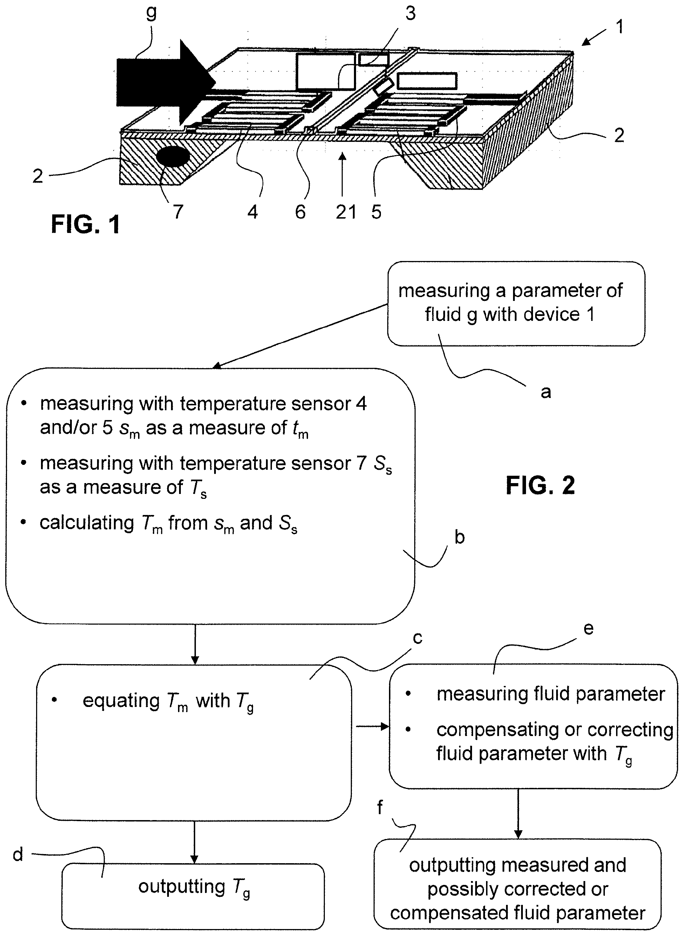

Figure 1 shows an embodiment of the sensor device 1 according to invention.

The sensor device 1 for determining a parameter of a fluid g comprises a substrate 2, preferably a bulk silicon chip, the substrate 2 having a recess 21. In or on said substrate 2, a absolute substrate temperature sensor 7 is arranged. The absolute substrate temperature sensor 7 is configured to provide a substrate temperature signal *S*ₛ indicative of an absolute substrate temperature *T*ₛ of said substrate 2.

Moreover, the sensor device 1 comprises a span element 3 that spans said recess 21. The span element 3 is, in this embodiment, a membrane as taught, for example, in US 2003/0115952.

The sensor device has a first temperature sensor 4 and a second span element temperature sensor 5, both first and second temperature sensors 4, 5 are disposed on said span element 3. The first temperature sensor 4 and second temperature sensor 5 are thermopiles that are configured and arranged to provide a span element temperature signal *s*ₘ indicative of a relative span element temperature *t*ₘ of said span element 3 relative to said absolute substrate temperature *T*ₛ of said substrate 2.

Furthermore, the sensor device 1 comprises a heater element 6 for locally heating the fluid g for conventional mass flow measurements. The heater element 6 is disposed on the span element 3 as well, more precisely, between said first and second temperature sensors 4 and 5.

The sensor device 1 is configured to measure, when operated accordingly, said parameter of said fluid g, by executing the steps:
i) measuring, by means of said first and second span element temperature sensors 4, 5, said span element temperature signal *s*ₘ;
ii) measuring, by means said substrate temperature sensor 7, said substrate temperature signal *Sₛ*;
iii) deriving, from said span element temperature signal *s*ₘ and said substrate temperature signal *S*ₛ, by means of appropriate electronics, an absolute span element temperature *T*ₘ.
   The sensor device 1 is further configured
iv) to use said absolute span element temperature *T*ₘ as a measure for said actual absolute temperature *T*_{g} of said fluid g for determining said parameter of said fluid g. The absolute fluid temperature *T*_{g} may be used as sensor device output. Additionally, the absolute fluid temperature *T*_{g} may be used for determining the measurement parameter, *i.e.* for either calculating it or for correcting or compensating a measurement result.

Depending on the specific embodiment, the fluid parameter may be one or more parameters of the group consisting of absolute fluid temperature, thermal conductivity, volumetric specific heat, and thermal diffusivity of the fluid.

The sensor device 1 is further configured to offer a first operation mode in which an absolute fluid temperature *T*_{g} is measured (via *t*ₘ and *T*ₛ) and at least one second operation mode in which one or more parameters of the group consisting of thermal conductivity, volumetric specific heat, and thermal diffusivity of the fluid may be measured. The sensor device 1 may also be configured to be set into at least one third operation mode in which conventional measurements may be performed.

The thermal flow sensor device 1 is configured to either intermittently turn on and off said heater element 6 and to measure said span element temperature signal *s*ₘ while said heater element 6 is turned off. The sensor device may also be configured to intermittently turn high and low said heater element 6 and to measure said span element temperature signal *s*ₘ while said heater element 6 is turned low.

The sensor device 1 is configured to turn on and off or high and low said heater element 6 in a pulsed manner or in a harmonic manner, in particular in a sinusoidal manner to measure at least one fluid parameter in a known manner while using the absolute fluid temperature *T*_{g} according to invention.

The sensor device 1 may, in some embodiments, be configured to measure a volumetric specific heat of said fluid g. Moreover, said sensor device 1 comprises or has access to a correlation, for example, a data set or a correlation function correlating volumetric specific heat to ambient pressure for said fluid g. Moreover, said sensor device 1 is configured to derive an ambient pressure by correlating said measured volumetric specific heat via said data or correlation function to the actual ambient pressure.

The sensor device 1 comprises or has access to data correlating volumetric specific heat to ambient pressure for more than one fluid g, and wherein said sensor device 1 is configured to receive an input regarding which fluid g is being measured or is configured to determine said fluid g in a known manner.

The sensor device 1 compensates with or corrects with or outputs absolute fluid temperatures measured on a timescale in a range of from 1 millisecond to 10 milliseconds, more preferably on a timescale in the range of from 2 milliseconds to 5 milliseconds, and in particular on the timescale of 4 milliseconds.

**Figure 2** shows a flow diagram illustrating embodiments of the method according to invention of measurement of a parameter of the fluid g by use of the absolute span element temperature *T*ₘ as a measure for the absolute fluid temperature *T*_{g}.

In step a, the sensor device 1 is chosen and the appropriate operation mode is selected.

In step b, the temperature sensor(s) 4 and/or 5 are used to measure *s*ₘ as a measure of *t*ₘ and temperature sensor 7 to measure *Sₛ* as a measure of *Tₛ* and *T*ₘ is derived based on *s*ₘ and *S*ₛ.

In step c, the absolute span element temperature *T*ₘ is taken as the absolute fluid temperature *T*_{g}.

In step d, depending on the operation mode, is *T*_{g} outputted.

In step e, depending on the operation mode, the fluid parameter is measured by using *T*_{g} as an input or the fluid parameter is measured and compensated or corrected with *T*_{g}.

In step f, the measured and, depending on the operation mode, corrected or compensated fluid parameter is outputted. The output may be provided to the user or to further electronic components for further processing.

While there are shown and described presently preferred embodiments of the invention, it is to be understood that the invention is not limited thereto but may be otherwise variously embodied and practiced within the scope of the following claims.

### LIST OF REFERENCE SIGNS

- 1: sensor device

- 2: substrate of 1
- 21: recess in 2

- 3: span element, membrane

- 4: first temperature sensor

- 5: second temperature sensor

- 6: heater element
- 7: substrate temperature sensor

- g: fluid
- *s*ₘ: span element temperature signal indicative of *t*ₘ
- *S*ₛ: absolute substrate temperature signal *t*ₘ span element temperature relative to *Tₛ*
- *T*_{g}: absolute temperature of g
- *T*ₛ: absolute temperature of 2

### LIST OF REFERENCE SIGNS

| | | | |
|---|---|---|---|
| 1 | sensor device | 7 | substrate temperature sensor |
| 2 | substrate of 1 | g | fluid |
| 21 | recess in 2 | *s*ₘ | span element temperature signal indicative of *t*ₘ |
| 3 | span element, membrane | *S*ₛ | absolute substrate temperature signal |
| 4 | first temperature sensor | *t*ₘ | span element temperature relative to *Tₛ* |
| 5 | second temperature sensor | *T*_{g} | absolute temperature of g |
| | | *T*ₕ | absolute temperature of 6 |
| 6 | heater element | *Tₛ* | absolute temperature of 2 |

## Claims

1. A method of using a sensor device (1) for measuring a parameter of a fluid (g), said parameter being a thermal conductivity of said fluid (g), a thermal diffusivity of said fluid (g), a volumetric specific heat of said fluid (g),
said sensor device (1) comprising:
a substrate (2) having a recess (21);
a span element (3) spanning said recess (21) at least partly;
at least two span element temperature sensors (4;5) arranged to provide a span element temperature signal (*s*ₘ);
at least one heater element (6); and
at least one substrate temperature sensor (7) arranged and configured to provide a substrate temperature signal (*S*ₛ) indicative of an absolute substrate temperature (*T*ₛ) of said substrate (2);
wherein said at least two span element temperature sensors (4,5) are disposed on said span element (3), and wherein said heater element (6) is disposed between said at least two span element temperature sensors (4,5);
wherein said at least two span element temperature sensors (4;5) are arranged to provide a span element temperature signal (*s*ₘ) indicative of a relative span element temperature (*t*ₘ) of said span element (3) relative to said absolute substrate temperature (*T*ₛ) of said substrate (2); and
said method comprising the steps of operating said sensor device (1) such as to:
**i)** measure, by means of said at least two span element temperature sensors (4;5), the parameter of the fluid (g) and said span element temperature signal (*s*ₘ); additionally measure, by means of said at least one substrate temperature sensor (7), said substrate temperature signal (*S*ₛ);
**ii)** deriving, from both said span element temperature signal (*s*ₘ) and said substrate temperature signal (*S*ₛ), an absolute span element temperature (*T*ₘ);
and
**iii)** using, by said sensor device (1), said absolute span element temperature (*T*ₘ) as a measure for an absolute temperature (*T*_{g}) of said fluid (g) for determining said parameter of said fluid (g),
wherein said sensor device (1) can be operated to measure said parameter of said fluid (g) and is configured to offer:
a first operation mode in which said sensor device (1) is configured as a temperature sensor for measuring said absolute fluid temperature (*T*_{g}), while said heater element (6) is turned off or low; and
at least one second operation mode in which said sensor device (1) is configured to measure, using said absolute span element temperature as a measure for said absolute temperature of said fluid, one or more parameters of the group consisting of thermal conductivity, volumetric specific heat, and thermal diffusivity of said fluid; wherein said heater element (6) is intermittently turned on and off and wherein said span element temperature signal (*s*ₘ) is measured while said heater element (6) is turned off; or wherein said heater element (6) is intermittently turned high and low and wherein said span element temperature signal (*s*ₘ) is measured while said heater element (6) is turned low, and
wherein the parameter of the fluid is determined by compensating or correcting the measured parameter of said fluid (g) with the absolute temperature (*T*_{g}) of said fluid, and
at least one third operation mode, in which said sensor device (1) is configured to measure one or more parameters of the group consisting of thermal conductivity, volumetric specific heat, and thermal diffusivity of said fluid without taking into account the absolute span element temperature as fluid temperature.

2. The method according to claim 1, wherein said sensor device (1) is a thermal flow sensor device.

3. The method according to any one of the preceding claims, wherein at least one of or all of said at least two span element temperature sensors (4;5) is/are a thermopile(s).

4. The method according to any one of the preceding claims, wherein said heater element (6) is turned on and off or high and low, respectively, in a pulsed manner or in a harmonic manner, in particular a sinusoidal manner.

5. The method according to any one of the preceding claims, wherein said volumetric specific heat of said fluid (g) is measured, wherein said fluid (g) is a known gas, and wherein an ambient pressure is derived based on correlating said measured volumetric specific heat to a known data set or a known correlation of said fluid (g) correlating said volumetric specific heat of said fluid (g) to ambient pressure.

6. The method according to any one of the preceding claims, wherein the span element (3) is configured to adjust to the absolute temperature (*T*_{g}) of the fluid (g) such that, with said sensor device (1), said absolute temperature (*T*_{g}) of said fluid (g) is evaluated on a timescale in a range of from 1 millisecond to 10 milliseconds, more preferably on a timescale in a range of from 2 milliseconds to 5 milliseconds, and in particular on the timescale of 4 milliseconds.

7. A sensor device (1) for determining a parameter of a fluid (g), said parameter being a thermal conductivity of said fluid (g), a thermal diffusivity of said fluid (g), a volumetric specific heat of said fluid (g),
said sensor device (1) comprising:
a substrate (2) having a recess (21);
a span element (3) spanning said recess (21) at least partly;
at least two span element temperature sensors (4;5) arranged to provide a span element temperature signal (*s*ₘ);
at least one heater element (6); and
at least one substrate temperature sensor (7) arranged and configured to provide a substrate temperature signal (*S*ₛ) indicative of an absolute substrate temperature (*T*ₛ) of said substrate (2);
wherein said at least two span element temperature sensors (4,5) are disposed on said span element (3), wherein said heater element (6) is disposed between said at least two span element temperature sensors (4,5),
wherein said at least two span element temperature sensors (4;5) are arranged to provide a span element temperature signal (*s*ₘ) indicative of a relative span element temperature (*t*ₘ) of said span element (3) relative to said absolute substrate temperature (*T*ₛ) of said substrate (2); and
wherein said sensor device (1) is configured:
i) to measure, by means of said at least two span element temperature sensors (4;5), the parameter of the fluid (g) and said span element temperature signal (*s*ₘ); to additionally measure, by means of said at least one substrate temperature sensor (7), said substrate temperature signal (*S*ₛ)
**ii)** to derive, from both said span element temperature signal (*s*ₘ) and said substrate temperature signal (*S*ₛ), an absolute span element temperature (*T*ₘ);
**iii)** to use, by said sensor device (1), said absolute span element temperature (*T*ₘ) as a measure for said actual absolute temperature (*T*_{g}) of said fluid (g) for determining said parameter of said fluid (g), and
wherein said sensor device (1) can be operated to measure said parameter of said fluid (g) and is configured to offer:
a first operation mode in which said sensor device (1) is configured as a temperature sensor for measuring said absolute fluid temperature (*T*_{g}), while said heater element (6) is turned off or low; and
at least one second operation mode in which said sensor device (1) is configured to measure, using said absolute span element temperature as a measure for said absolute temperature of said fluid, one or more parameters of the group consisting of thermal conductivity, volumetric specific heat, and thermal diffusivity of said fluid;
wherein said sensor device (1) is configured to intermittently turn on and off said heater element (6) and wherein said sensor device (1) is configured such as to measure said span element temperature signal (*s*ₘ) while said heater element (6) is turned off; or
wherein said sensor device (1) is configured to intermittently turn high and low said heater element (6) and wherein said sensor device (1) is configured such as to measure said span element temperature signal (*s*ₘ) while said heater element (6) is turned low, and
wherein said sensor device (1) is further configured to determine the parameter of the fluid by compensating or correcting the measured parameter of said fluid (g) with the absolute temperature (*T*_{g}) of said fluid, and
at least one third operation mode, in which said sensor device (1) is configured to measure one or more parameters of the group consisting of thermal conductivity, volumetric specific heat, and thermal diffusivity of said fluid without taking into account the absolute span element temperature as fluid temperature.

8. The sensor device according to claim 7 wherein said span element (3) is a membrane and
wherein, preferably, at least one of or all of said at least two span element temperature sensors (4;5) is/are a thermopile(s).

9. The sensor device (1) according to any one of the preceding claims 7 to 8, wherein said sensor device (1) is configured to turn on and off or high and low, respectively, said heater element (6) in a pulsed manner or in a harmonic manner, in particular in a sinusoidal manner.

10. The sensor device (1) according to any one of claims 7 to 9, wherein said sensor device (1) is further configured to measure an ambient pressure in that a volumetric specific heat of said fluid (g) is measured, wherein said sensor device (1) comprises or has access to a data set or a correlation function correlating the volumetric specific heat to ambient pressure for said fluid (g), and wherein said sensor device (1) is configured to derive the ambient pressure based on said data set or correlation function;
wherein, preferably, said sensor device (1) comprises or has access to a data set or correlation function correlating volumetric specific heat to ambient pressure for more than one fluid (g), and wherein said sensor device (1) is configured to receive an input regarding which fluid (g) is being measured or is configured to determine said fluid (g) in a known manner.

11. The sensor device (1) according to any one of the preceding claims 7 to 10, wherein the span element (3) is configured to adjust to the absolute temperature (*T*_{g}) of the fluid (g) such that said absolute temperature (*T*_{g}) of said fluid (g) is evaluated on a timescale in a range of from 1 millisecond to 10 milliseconds, more preferably on a timescale in a range of from 2 milliseconds to 5 milliseconds, and in particular on the timescale of 4 milliseconds.

## Patentansprüche

1. Verfahren zur Verwendung einer Sensorvorrichtung (1) zum Messen eines Parameters eines Fluids (g), wobei der Parameter eine Wärmeleitfähigkeit des Fluids (g), eine Temperaturleitfähigkeit des Fluids (g), eine volumetrische spezifische Wärme des Fluids (g) ist, wobei die Sensorvorrichtung (1) umfasst:
ein Substrat (2) mit einer Aussparung (21);
ein Spannelement (3), das die Aussparung (21) zumindest teilweise überspannt;
mindestens zwei Spannelementtemperatursensoren (4;5), die so angeordnet sind, dass sie ein Spannelementtemperatursignal (sₘ) liefern;
mindestens ein Heizelement (6); und
mindestens einen Substrattemperatursensor (7), der so angeordnet und ausgebildet ist, dass er ein Substrattemperatursignal (*S*ₛ) liefert, das auf eine absolute Substrattemperatur (*T*ₛ) des Substrats (2) schliessen lässt;
wobei die mindestens zwei Spannelementtemperatursensoren (4, 5) auf dem Spannelement (3) angeordnet sind, und wobei das Heizelement (6) zwischen den mindestens zwei Spannelementtemperatursensoren (4, 5) angeordnet ist;
wobei die mindestens zwei Spannelementtemperatursensoren (4; 5) angeordnet sind, um ein Spannelementtemperatursignal (sₘ) zu liefern, das auf eine relative Spannelementtemperatur (*t*ₘ) des Spannelements (3) bezüglich der absoluten Substrattemperatur (*T*ₛ) des Substrats (2) schliessen lässt; und
wobei das Verfahren die Schritte des Betreibens der Sensorvorrichtung (1) umfasst, so dass:
**i)** mittels der mindestens zwei Spannelementtemperatursensoren (4; 5) der Parameter des Fluids (g) und das Spannelementtemperatursignal (sₘ) gemessen wird; zusätzlich mittels des mindestens einen Substrattemperatursensors (7) das Substrattemperatursignal (*S*ₛ) gemessen wird;
**ii)** eine absolute Spannelementtemperatur (*T*ₘ) sowohl aus dem Spannelementtemperatursignal (sₘ) als auch aus dem Substrattemperatursignal (*S*ₛ) abgeleitet wird;
und
**iii)** durch die Sensorvorrichtung (1) die absolute Spannelementtemperatur (*T*ₘ) als ein Mass für eine absolute Temperatur (*T*_{g}) des Fluids (g) zur Bestimmung des Parameters des Fluids (g) verwendet wird,
wobei die Sensorvorrichtung (1) betrieben werden kann, um den Parameter des Fluids (g) zu messen, und dazu ausgebildet ist, um anzubieten:
einen ersten Betriebsmodus, in dem die Sensorvorrichtung (1) als ein Temperatursensor zum Messen der absoluten Fluidtemperatur (*T*_{g}) ausgebildet ist, während das Heizelement (6) ausgeschaltet oder auf niedrig geschaltet ist; und
mindestens einen zweiten Betriebsmodus, in dem die Sensorvorrichtung (1) derart ausgebildet ist, dass sie unter Verwendung der absoluten Spannelementtemperatur als Mass für die absolute Temperatur des Fluids einen oder mehrere Parameter der Gruppe bestehend aus Wärmeleitfähigkeit, volumetrischer spezifischer Wärme und Temperaturleitfähigkeit des Fluids misst; wobei das Heizelement (6) intermittierend ein- und ausgeschaltet wird und wobei das Spannelementtemperatursignal (sₘ) gemessen wird, während das Heizelement (6) ausgeschaltet ist; oder wobei das Heizelement (6) intermittierend hoch und niedrig geschaltet wird und wobei das Spannelementtemperatursignal (sₘ) gemessen wird, während das Heizelement (6) niedrig geschaltet ist, und
wobei der Parameter des Fluids durch Kompensieren oder Korrigieren des gemessenen Parameters des Fluids (g) mit der absoluten Temperatur (*T*_{g}) des Fluids bestimmt wird, und
mindestens einen dritten Betriebsmodus, in dem die Sensorvorrichtung (1) derart ausgebildet ist, dass sie einen oder mehrere Parameter aus der Gruppe bestehend aus Wärmeleitfähigkeit, volumetrischer spezifischer Wärme und Temperaturleitfähigkeit des Fluids misst, ohne die absolute Spannelementtemperatur als Fluidtemperatur zu berücksichtigen.

2. Verfahren nach Anspruch 1, wobei die Sensorvorrichtung (1) eine thermische Strömungssensorvorrichtung ist.

3. Verfahren nach einem der vorhergehenden Ansprüche, wobei mindestens einer oder alle der mindestens zwei Spannelementtemperatursensoren (4;5) eine Thermosäule(n) ist/sind.

4. Verfahren nach einem der vorhergehenden Ansprüche, wobei das Heizelement (6) in gepulster Weise oder in harmonischer Weise, insbesondere in sinusförmiger Weise, ein- und ausgeschaltet beziehungsweise hoch und niedrig geschaltet wird.

5. Verfahren nach einem der vorhergehenden Ansprüche, wobei die volumetrische spezifische Wärme des Fluids (g) gemessen wird, wobei das Fluid (g) ein bekanntes Gas ist und wobei ein Umgebungsdruck abgeleitet wird basierend auf der Korrelation der gemessenen volumetrischen spezifischen Wärme mit einem bekannten Datensatz oder einer bekannten Korrelation des Fluids (g), die die volumetrische spezifische Wärme des Fluids (g) mit dem Umgebungsdruck korreliert.

6. Verfahren nach einem der vorhergehenden Ansprüche, wobei das Spannelement (3) derart ausgebildet ist, dass es sich an die absolute Temperatur (*T*_{g}) des Fluids (g) derart anpasst, dass mit der Sensorvorrichtung (1) die absolute Temperatur (*T*_{g}) des Fluids (g) auf einer Zeitskala in einem Bereich von 1 Millisekunde bis 10 Millisekunden, bevorzugter auf einer Zeitskala in einem Bereich von 2 Millisekunden bis 5 Millisekunden und insbesondere auf der Zeitskala von 4 Millisekunden ausgewertet wird.

7. Sensorvorrichtung (1) zum Bestimmen eines Parameters eines Fluids (g), wobei der Parameter eine Wärmeleitfähigkeit des Fluids (g), eine Temperaturleitfähigkeit des Fluids (g), eine volumetrische spezifische Wärme des Fluids (g) ist,
wobei die Sensorvorrichtung (1) umfasst:
ein Substrat (2) mit einer Aussparung (21);
ein Spannelement (3), das die Aussparung (21) zumindest teilweise überspannt;
mindestens zwei Spannelementtemperatursensoren (4;5), die so angeordnet sind, dass sie ein Spannelementtemperatursignal (sₘ) liefern;
mindestens ein Heizelement (6); und
mindestens einen Substrattemperatursensor (7), der so angeordnet und ausgebildet ist, dass er ein Substrattemperatursignal (*S*ₛ) liefert, das auf eine absolute Substrattemperatur (*T*ₛ) des Substrats (2) schliessen lässt;
wobei die mindestens zwei Spannelementtemperatursensoren (4, 5) auf dem Spannelement (3) angeordnet sind, wobei das Heizelement (6) zwischen den mindestens zwei Spannelementtemperatursensoren (4, 5) angeordnet ist,
wobei die mindestens zwei Spannelementtemperatursensoren (4; 5) angeordnet sind, um ein Spannelementtemperatursignal (sₘ) zu liefern, das auf eine relative Spannelementtemperatur (*t*ₘ) des Spannelements (3) bezüglich der absoluten Substrattemperatur (*T*ₛ) des Substrats (2) schliessen lässt; und
wobei die Sensorvorrichtung (1) dazu ausgebildet ist:
**i)** um mittels der mindestens zwei Spannelementtemperatursensoren (4; 5) den Parameter des Fluids (g) und das Spannelementtemperatursignal (sₘ) zu messen; um zusätzlich mittels des mindestens einen Substrattemperatursensors (7) das Substrattemperatursignal (*S*ₛ) zu messen;
**ii)** um sowohl aus dem Spannelementtemperatursignal (sₘ) als auch aus dem Substrattemperatursignal (*S*ₛ) eine absolute Spannelementtemperatur (*T*ₘ) abzuleiten;
**iii)** durch die Sensorvorrichtung (1) die absolute Spannelementtemperatur (*T*ₘ) als ein Mass für die tatsächliche absolute Temperatur (*T*_{g}) des Fluids (g) zu verwenden, um den Parameter des Fluids (g) zu bestimmen, und
wobei die Sensorvorrichtung (1) betrieben werden kann, um den Parameter des Fluids (g) zu messen, und ausgebildet ist, um anzubieten:
einen ersten Betriebsmodus, in dem die Sensorvorrichtung (1) als ein Temperatursensor zum Messen der absoluten Fluidtemperatur (*T*_{g}) ausgebildet ist, während das Heizelement (6) ausgeschaltet oder niedrig geschaltet ist; und
mindestens einen zweiten Betriebsmodus, in dem die Sensorvorrichtung (1) so ausgebildet ist, dass sie unter Verwendung der absoluten Spannelementtemperatur als Mass für die absolute Temperatur des Fluids einen oder mehrere Parameter der Gruppe bestehend aus Wärmeleitfähigkeit, volumetrischer spezifischer Wärme und Temperaturleitfähigkeit des Fluids misst;
wobei die Sensorvorrichtung (1) so ausgebildet ist, dass sie das Heizelement (6) intermittierend ein- und ausschaltet, und wobei die Sensorvorrichtung (1) so ausgebildet ist, dass sie das Spannelementtemperatursignal (sₘ) misst, während das Heizelement (6) ausgeschaltet ist; oder
wobei die Sensorvorrichtung (1) so ausgebildet ist, dass sie das Heizelement (6) intermittierend hoch und niedrig schaltet, und wobei die Sensorvorrichtung (1) so ausgebildet ist, dass sie das Spannelementtemperatursignal (sₘ) misst, während das Heizelement (6) niedrig geschaltet wird, und
wobei die Sensorvorrichtung (1) weiter dazu ausgebildet ist, um den Parameter des Fluids durch Kompensieren oder Korrigieren des gemessenen Parameters des Fluids (g) mit der absoluten Temperatur (*T*_{g}) des Fluids zu bestimmen, und
mindestens einen dritten Betriebsmodus, in dem die Sensorvorrichtung (1) derart ausgebildet ist, dass sie einen oder mehrere Parameter aus der Gruppe bestehend aus Wärmeleitfähigkeit, volumetrischer spezifischer Wärme und Temperaturleitfähigkeit des Fluids misst, ohne die absolute Spannelementtemperatur als Fluidtemperatur zu berücksichtigen.

8. Sensorvorrichtung nach Anspruch 7, wobei das Spannelement (3) eine Membran ist und
wobei vorzugsweise mindestens einer oder alle der mindestens zwei Spannelementtemperatursensoren (4; 5) eine Thermosäule(n) ist/sind.

9. Sensorvorrichtung (1) nach einem der vorhergehenden Ansprüche 7 bis 8, wobei die Sensorvorrichtung (1) derart ausgebildet ist, dass sie das Heizelement (6) in einer gepulsten Weise oder in einer harmonischen Weise, insbesondere in einer sinusförmigen Weise, ein- und ausschaltet beziehungsweise hoch und niedrig schaltet.

10. Sensorvorrichtung (1) nach einem der Ansprüche 7 bis 9, wobei die Sensorvorrichtung (1) weiter dazu ausgebildet ist, dass sie einen Umgebungsdruck misst, indem eine volumetrische spezifische Wärme des Fluids (g) gemessen wird, wobei die Sensorvorrichtung (1) einen Datensatz oder eine Korrelationsfunktion, die die volumetrische spezifische Wärme mit dem Umgebungsdruck für das Fluid (g) korreliert, umfasst oder Zugriff darauf hat, und wobei die Sensorvorrichtung (1) derart ausgebildet ist, dass sie den Umgebungsdruck basierend auf dem Datensatz oder der Korrelationsfunktion ableitet;
wobei, vorzugsweise, die Sensorvorrichtung (1) einen Datensatz oder eine Korrelationsfunktion, die die volumetrische spezifische Wärme mit dem Umgebungsdruck für mehr als ein Fluid (g) korreliert, umfasst oder Zugriff darauf hat, und wobei die Sensorvorrichtung (1) derart ausgebildet ist, dass sie eine Eingabe bezüglich des Fluids (g), das gemessen wird, empfängt, oder derart ausgebildet ist, dass sie das Fluid (g) auf bekannte Weise bestimmt.

11. Sensorvorrichtung (1) nach einem der vorhergehenden Ansprüche 7 bis 10, wobei das Spannelement (3) derart ausgebildet ist, dass es sich an die absolute Temperatur (*T*_{g}) des Fluids (g) derart anpasst, dass die absolute Temperatur (*T*_{g}) des Fluids (g) auf einer Zeitskala in einem Bereich von 1 Millisekunde bis 10 Millisekunden, bevorzugter auf einer Zeitskala in einem Bereich von 2 Millisekunden bis 5 Millisekunden und insbesondere auf der Zeitskala von 4 Millisekunden ausgewertet wird.

## Revendications

1. Un procédé d'utilisation d'un dispositif de capteur (1) pour mesurer un paramètre d'un fluide (g), ledit paramètre étant une conductivité thermique dudit fluide (g), une diffusivité thermique dudit fluide (g), une chaleur volumétrique spécifique dudit fluide (g),
ledit dispositif de capteur (1) comprenant:
un substrat (2) ayant un évidement (21);
un élément de travée (3) traversant ledit évidement (21) au moins en partie;
au moins deux capteurs de température d'élément de travée (4; 5) agencés pour fournir un signal de température d'élément de travée (*s*ₘ);
au moins un élément chauffant (6); et
au moins un capteur de température de substrat (7) agencé et configuré pour fournir un signal de température de substrat (*S*ₛ) indicatif d'une température absolue de substrat (Tₛ) dudit substrat (2);
dans lequel au moins deux capteurs de température d'élément de travée (4; 5) sont disposés sur ledit élément de travée (3), et dans lequel ledit élément chauffant (6) est disposé entre lesdits au moins deux capteurs de température d'élément de travée (4; 5);
dans lequel lesdits au moins deux capteurs de température d'élément de travée (4; 5) sont agencés pour fournir un signal de température d'élément de travée (sₘ) indicatif d'une température relative d'élément de travée (tₘ) dudit élément de travée (3) relative à ladite température absolue de substrat (Tₛ) dudit substrat (2); et
ledit procédé comprenant les étapes de faire fonctionner ledit dispositif de capteur (1) de manière à:
i) mesurer, au moyen desdits au moins deux capteurs de température d'élément de travée (4; 5), le paramètre du fluide (g) et ledit signal de température d'élément de travée (sₘ); mesurer supplémentairement, au moyen dudit au moins un capteur de température de substrat (7), ledit signal de température de substrat (Sₛ);
ii) dériver, à partir des deux dudit signal de température de l'élément de travée(sₘ); et dudit signal de température de substrat (Sₛ), une température absolue de l'élément de travée (Tₘ); et
iii) utiliser, par ledit dispositif de capteur (1), ladite température absolue de l'élément de travée (*T*ₘ) comme mesure d'une température absolue (*T*_{g}) dudit fluide (g) pour déterminer ledit paramètre dudit fluide (g),
dans lequel le dispositif de capteur (1) peut être opéré pour mesurer ledit paramètre du dit fluide (g) et est configuré pour offrir:
un premier mode d'opération dans lequel ledit dispositif de capteur (1) est configuré en tant que capteur de température pour mesurer ladite température absolue de fluide (T_{g}), pendant que ledit élément chauffant (6) est éteint ou faiblement allumé; et
au moins un second mode d'opération dans lequel ledit dispositif de capteur (1) est configuré pour mesurer, en utilisant ladite température absolue d'élément de travée comme une mesure pour ladite température absolue dudit fluide, un ou plusieurs paramètres du groupe consistant de la conductivité thermique, la chaleur volumétrique spécifique et de la diffusivité thermique dudit fluide (g), dans lequel le ledit élément chauffant (6) est allumé et éteint par intermittence et dans lequel ledit signal de température d'élément de travée (sₘ) est mesuré pendant que ledit élément chauffant (6) est éteint; ou dans lequel ledit élément chauffant (6) est réglé par intermittence à l'état haut et bas et dans lequel ledit signal de température d'élément de travée (sₘ) est mesuré pendant que ledit élément chauffant (6) est réglé à l'état bas; et
dans lequel le paramètre du fluide est déterminé par compensation ou correction du paramètre mesuré du dit fluide (g) avec la température absolue du fluide (T_{g}) du dit fluide, et
au moins un troisième mode d'opération, dans lequel ledit dispositif de capteur (1) est configuré pour mesurer un ou plusieurs paramètres du groupe consistant de la conductivité thermique, la chaleur volumétrique spécifique et de la diffusivité thermique dudit fluide sans prendre en compte la température absolue d'élément de travée comme température de fluide.

2. Le procédé selon la revendication 1, dans lequel ledit dispositif de capteur (1) est un dispositif de capteur de flux thermique.

3. Le procédé selon l'une quelconque des revendications précédentes, dans lequel au moins un ou tous lesdits au moins deux capteurs de température d'élément de travée (4;5) est / sont une/des thermopile/s.

4. Le procédé selon l'une quelconque des revendications précédentes, dans lequel ledit élément chauffant (6) est réglé par intermittence à l'état haut et bas, respectivement, d'une manière pulsée ou d'une manière harmonique, en particulier d'une manière sinusoïdale.

5. Le procédé selon l'une quelconque des revendications précédentes, dans lequel ladite chaleur volumétrique spécifique dudit fluide (g) est mesurée, dans lequel ledit fluide (g) est un gaz connu, et dans lequel une pression ambiante est dérivée sur la base de la corrélation de ladite chaleur volumétrique spécifique mesurée avec une ensemble de données connu ou une corrélation connue dudit fluide (g) corrélant ladite chaleur volumétrique spécifique dudit fluide (g) à la pression ambiante.

6. Le procédé selon l'une quelconque des revendications précédentes, dans lequel l'élément de travée (3) est configuré pour s'ajuster à la température absolue (T_{g}) du fluide (g) de sorte que, avec ledit dispositif de capteur (1), ladite température absolue (T_{g}) dudit fluide (g) est évaluée sur une échelle de temps dans une plage de 1 milliseconde à 10 millisecondes, plus préférentiellement sur une échelle de temps dans une plage de 2 millisecondes à 5 millisecondes, et en particulier sur l'échelle de temps de 4 millisecondes.

7. Un dispositif de capteur (1) pour déterminer un paramètre d'un fluide (g), ledit paramètre étant une conductivité thermique dudit fluide (g), une diffusivité thermique dudit fluide (g), une chaleur volumétrique spécifique dudit fluide (g),
ledit dispositif de capteur (1) comprenant:
un substrat (2) ayant un évidement (21);
un élément de travée (3) traversant ledit évidement (21) au moins en partie;
au moins deux capteurs de température d'élément de travée (4; 5) agencés pour fournir un signal de température d'élément de travée (*s*ₘ);
au moins un élément chauffant (6); et
au moins un capteur de température de substrat (7) agencé et configuré pour fournir un signal de température de substrat (*S*ₛ) indicatif d'une température absolue de substrat (Tₛ) dudit substrat (2);
dans lequel au moins deux capteurs de température d'élément de travée (4; 5) sont disposés sur ledit élément de travée (3), et dans lequel ledit élément chauffant (6) est disposé entre lesdits au moins deux capteurs de température d'élément de travée (4; 5);
dans lequel lesdits au moins deux capteurs de température d'élément de travée (4; 5) sont agencés pour fournir un signal de température d'élément de travée (sₘ) indicatif d'une température relative d'élément de travée (tₘ) dudit élément de travée (3) relative à ladite température absolue de substrat (Tₛ) dudit substrat (2); et
ledit dispositif de capteur (1) est configuré pour:
i) mesurer, au moyen desdits au moins deux capteurs de température d'élément de travée (4; 5), le paramètre du fluide (g) et ledit signal de température d'élément de travée (*s*ₘ); supplémentairement mesurer, au moyen de l'au moins un capteur de température de substrat (7) ledit signal de température de substrat (Sₛ);
ii) dériver, à partir des deux dudit signal de température de l'élément de travée (sₘ); et dudit signal de température de substrat (Sₛ), une température absolue de l'élément de travée (Tₘ);
iii) utiliser, par ledit dispositif de capteur (1), ladite température absolue de l'élément de travée (*T*ₘ) comme mesure pour la température absolue actuelle (T_{g}) dudit fluide (g) pour déterminer ledit paramètre dudit fluide (g), et
dans lequel le dispositif de capteur (1) peut être opéré pour mesurer ledit paramètre du dit fluide (g) et est configuré pour offrir
un premier mode d'opération dans lequel ledit dispositif de capteur (1) est configuré en tant que capteur de température pour mesurer ladite température absolue de fluide (T_{g}), pendant que ledit élément chauffant (6) est éteint ou faiblement allumé; et
au moins un second mode d'opération dans lequel ledit dispositif de capteur (1) est configuré pour mesurer, en utilisant ladite température absolue d'élément de travée comme une mesure pour ladite température absolue dudit fluide, un ou plusieurs paramètres du groupe consistant de la conductivité thermique, la chaleur volumétrique spécifique et de la diffusivité thermique dudit fluide (g),
dans lequel le ledit dispositif de capteur (1) est configuré pour allumer et éteindre ledit élément chauffant (6) par intermittence et dans lequel le ledit dispositif de capteur (1) est configuré pour mesurer ledit signal de température d'élément de travée (sₘ) pendant que ledit élément chauffant (6) est éteint; ou
dans lequel le ledit dispositif de capteur (1) est configuré pour mettre ledit élément chauffant (6) par intermittence à l'état haut et bas et dans lequel le ledit dispositif de capteur (1) est configuré pour mesurer ledit signal de température d'élément de travée (sₘ) pendant que ledit élément chauffant (6) est réglé à l'état bas; et
dans lequel le ledit dispositif de capteur (1) est configuré en outre pour déterminer le paramètre du fluide par compensation ou correction du paramètre mesuré du dit fluide (g) avec la température absolue du fluide (T_{g}) du dit fluide, et
au moins un troisième mode d'opération, dans lequel ledit dispositif de capteur (1) est configuré pour mesurer un ou plusieurs paramètres du groupe consistant de la conductivité thermique, la chaleur volumétrique spécifique et de la diffusivité thermique dudit fluide sans prendre en compte la température absolue d'élément de travée comme température de fluide.

8. Le dispositif de capteur selon la revendication 7, dans lequel ledit élément de travée (3) est une membrane, dans lequel de préférence, au moins un des au moins deux capteurs de température d'élément de travée (4; 5) est/sont un/des thermopile/s.

9. Le dispositif de capteur (1) selon l'une quelconque des revendications 7 à 8, dans lequel ledit dispositif de capteur (1) est configuré pour allumer et éteindre ou mettre à l'état haut et bas ledit élément chauffant (6) par intermittence, respectivement, d'une manière pulsée ou d'une manière harmonique, en particulier d'une manière sinusoïdale.

10. Le dispositif de capteur (1) selon l'une quelconque des revendications 7 à 9, dans lequel ledit dispositif de capteur (1) est configuré en outre pour mesureur une pression ambiante en ce que une chaleur volumétrique spécifique dudit fluide (g) est mesurée, dans lequel ledit dispositif de capteur (1) comprend ou a accès à un ensemble de données ou une fonction de corrélation corrélant la chaleur volumétrique spécifique à la pression ambiante pour le dir fluide (g), et dans lequel le dit dispositif de capteur (1) est configuré pour dériver la pression ambiante sur la base dudit ensemble de données ou de ladite fonction de corrélation;
dans lequel, de préférence, ledit dispositif de capteur (1) comprend ou a accès à un ensemble de données ou une fonction de corrélation corrélant la chaleur volumétrique spécifique à la pression ambiante pour plus d'un fluide (g), et dans lequel le dit dispositif de capteur (1) est configuré pour recevoir une entrée concernant quel fluide (g) est mesuré ou est configuré pour déterminer ledit fluide (g) d'une manière connue.

11. Le dispositif de capteur (1) selon l'une quelconque des revendications 7 à 10, dans lequel l'élément de travée (3) est configuré pour s'ajuster à la température absolue (T_{g}) du fluide (g) de sorte que ladite température absolue (T_{g}) dudit fluide (g) est évaluée sur une échelle de temps dans une plage de 1 milliseconde à 10 millisecondes, plus préférentiellement sur une échelle de temps dans une plage de 2 millisecondes à 5 millisecondes, et en particulier sur l'échelle de temps de 4 millisecondes.
